# EUROPÄISCHE PATENTSCHRIFT

(11) **EP 1 188 017 B1**
(45) Veröffentlichungstag und Bekanntmachung des Hinweises auf die Patenterteilung: **21.07.2004**
(21) Anmeldenummer: 01933829.2
(22) Anmeldetag: 14.04.2001
(51) Int. Cl.: F16L 59/02

(54) **ISOLATIONSELEMENT**
INSULATING ELEMENT
ELEMENT D'ISOLATION

(30) Priorität: 22.04.2000 DE 10020048; 06.06.2000 DE 10028018; 22.12.2000 DE 10064607
(43) Veröffentlichungstag der Anmeldung: 20.03.2002
(73) Patentinhaber: illbruck Building Systems GmbH, 51381 Leverkusen (DE)
(72) Erfinder: ARNDT, Rainer, 51373 Leverkusen (DE); CZERNY, Hans-Rudolf, 53913 Swistal (DE)
(74) Vertreter: Müller, Enno, Dipl.-Ing.
(86) Internationale Anmeldenummer: PCT/EP2001/004270
(87) Internationale Veröffentlichungsnummer: WO 2001/081816

(56) Entgegenhaltungen:
- EP-A- 0 169 191
- EP-A- 0 686 732
- US-A- 4 902 550

## Beschreibung

Die Erfindung betrifft ein Isolationselement, wie es etwa zur Wärme- und/oder Schallisolation eingesetzt werden kann, wobei mindestens eine Vlieslage und/oder eine Schaumstofflage von einer Folienlage umhüllt ist.

Derartige Isolationselemente sind bereits in verschiedenen Ausgestaltungen bekannt geworden, wie z.B. im Dokument EP 0 686 732 A. Es wird bspw. auf die DE 198 48 679 A1 verwiesen. Da derartige Isolationselemente vorzugweise auch im Flugzeugbau eingesetzt werden, wird ein hoher Wert auf eine Brand-ausbreitungshemmende Eigenschaft gelegt. Wie aus vorgenannter Druckschrift hervorgeht, ist hierzu bereits vorgeschlagen worden, die Folienlage aus aluminiumbedampften Polyethylen oder gegebenenfalls auch aus inhärent flammwidrigen Polymeren herzustellen. Darüber hinaus ist vorgeschlagen worden, soweit eine Schaumstofflage verwendet wird, eine Polyimid-Schaumstofflage einzusetzen.

Andererseits besteht bei derartigen Isolationselementen auch die Anforderung, die Umhüllung wasserdampfdurchlässig auszubilden.

Die wasserdampfdurchlässige Ausbildung, gegebenenfalls auch richtungsabhängig wasserdampfdurchlässige Ausbildung, lässt sich aber bislang nicht mit der gewünschten Brand-ausbreitungshemmenden Eigenschaft des Isolationselementes, auch hinsichtlich seiner Umhüllung, kombinieren.

Hiervon ausgehend beschäftigt sich die Erfindung mit der technischen Aufgabe, ein Isolationselement anzugeben, das einerseits dampfdiffusionsdurchlässig ist, in der gewünschten Weise, andererseits aber auch möglichst den hohen Anforderungen an Brand-ausbreitungshemmende Eigenschaften des Isolationselementes genügt.

Diese Aufgabe ist zunächst und im Wesentlichen beim Gegenstand des Anspruches 1 gelöst, wobei darauf abgestellt ist, dass die Folienlage aus einem Brand-ausbreitungshemmender dampfdiffusionsgeschlossenen Werkstoff besteht, dass die Folienlage weiter Durchlassöffnungen aufweist und dass die Durchlassöffnungen dampfdiffusionsoffen ausgebildet sind. Erfindungsgemäß wird also der Weg beschritten, die Folienlage bzw., wie es sich auch aus Nachstehendem noch ergibt, bevorzugt eine äußere Folienlage, nur überwiegend Brand-ausbreitungshemmend auszugestalten, jedoch Durchtrittsöffnungen zu belassen, die zwar auch folienverschlossen sind, jedoch dampfdiffusionsoffen sind. Die Folienlage selbst kann somit nicht oder gegebenenfalls nur wesentlich schlechter dampfdiffusionsdurchlässig sein. Eine erste konkretere Ausgestaltung dieser Lehre schlägt vor, dass die Durchlassöffnungen aus in der Folienlage ausgebildeten Ausnehmungen bestehen und dass diese Ausnehmungen jeweils durch eine fensterartig angeordnete Zweitfolie aus dampfdiffusionsoffenem Werkstoff verschlossen sind. Es können also Ausstanzungen, lochartige Ausstanzungen, in der Folienlage vorgenommen werden und diese dann mit einzelnen, fleckenartigen Abschnitten einer Zweitfolie überdeckt werden. Bspw. kann die Zweitfolie insoweit mit der äußeren Folienlage verklebt werden, so dass die Ausnehmungen hierdurch verschlossen sind. Hinsichtlich der Ausnehmungen, was auch für die nachstehend noch beschriebenen Ausgestaltungen zutreffend ist, bieten sich die unterschiedlichsten Geometrien an. Bspw. kreisförmig, rechteckig, sternförmig, gitterartig u.a. In einer weiteren Konkretisierung schlägt die Erfindung auch vor, dass die Zweitfolie unterhalb der äußeren Folienlage und diese auch in den von Durchlassöffnungen freien Bereichen überdeckend angeordnet ist. Es können also ganz einfach übereinander liegende Folienlagen vorgesehen sein, wobei die äußere Folienlage durch den Brandausbreitungshemmenden dampfdiffusionsgeschlossenen Werkstoff gebildet ist und die innere Folienlage durch einen dampfdiffusionsoffenen Werkstoff, wobei weiter eben die äußere Folienlage Durchgangsöffnungen aufweist, die dampfdiffusionsoffene Folienlage jedoch durchgehend geschlossen ausgebildet ist.

Weiter ist es grundsätzlich möglich, dass diese Folienlagen die Vlies- und/oder Schaumstofflage (oder gegebenenfalls mehrerer dieser Lagen) jeweils gesondert und unabhängig voneinander umgeben. Darüber hinaus können diese Folienlagen insgesamt randverschweißt sein (wobei sich dann an einer Naht im letztbeschriebenen Beispielsfall vier Lagen übereinander ergeben). Darüber hinaus kann aber auch vorgesehen sein, dass die äußere Folienlage mit der Zweitfolie kaschierverbunden ist. Allein unter Ausnutzung der Klebfähigkeit der Folienlage und/oder der Zweitfolie kann eine Verhaftung herbeigeführt sein. Die Folien können auch durch einen gesonderten Klebstoff oder eine gesonderte Klebstofflage miteinander verbunden sein. In letzterem Fall empfiehlt es sich jedoch, die Klebstofflage auch nur rasterartig vorzusehen, um so jedenfalls in den Bereichen der Durchtrittsöffnungen möglichst großflächig die dampfdiffusionsoffene Eigenschaft der Zweitfolie zu bewahren.

In weiterer Ausgestaltung wird auch vorgeschlagen, dass unterhalb der Zweitfolienlage eine Drittfolienlage angeordnet ist und dass auch die Drittfolienlage aus einem Brand-ausbreitungshemmenden Werkstoff besteht, jedoch dampfdiffusionsoffene Durchlassöffnungen aufweist.

Hinsichtlich des Brand-ausbreitungshemmenden Werkstoffs bietet sich insbesondere Polyimid an, das auch als Polyimidfolien bereits marktverfügbar ist. Es kann aber auch bspw. eine Polyphenylensulfide- (PPS-) Folie eingesetzt werden. Weiter auch eine Polyester- (PET-) Folie, eine Polyvinylfluorid- (PVD-) oder Polyvinyldifluorid (PVDF-) Folie.

Nachstehend ist die Erfindung des Weiteren anhand der beigefügten Zeichnung, die jedoch lediglich Ausführungsbeispiele wiedergibt, erläutert. Hierbei zeigt:
- Fig. 1: eine erste schematische Ansicht einer äußeren Folienlage mit dampfdiffusionsoffen ausgebildeten Durchlassöffnungen;
- Fig. 2: einen Querschnitt durch den Gegenstand gemäß Fig. 1, geschnitten entlang der Linie II-II;
- Fig. 3: eine schematische Ansicht eines mehrlagigen Aufbaus unterschiedlicher Folien zur Umhüllung eines Isolationselementes;
- Fig. 4: eine schematische perspektivische Ansicht eines ersten Ausführungsbeisiels eines Isolationselementes;
- Fig. 5: eine Querschnittsansicht eines zweiten Ausführungsbeispiels eines Isolationselementes.

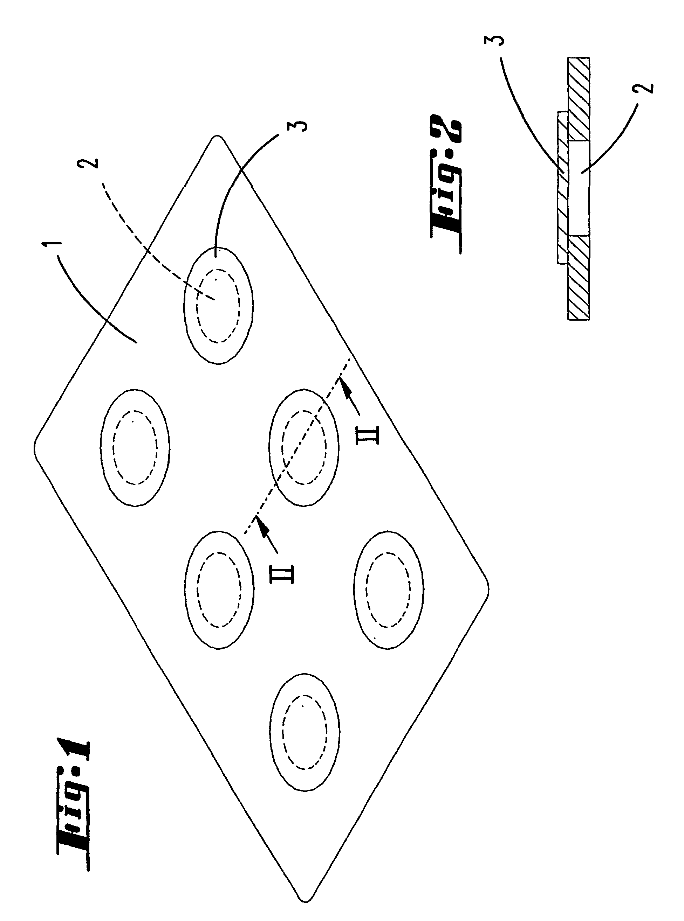

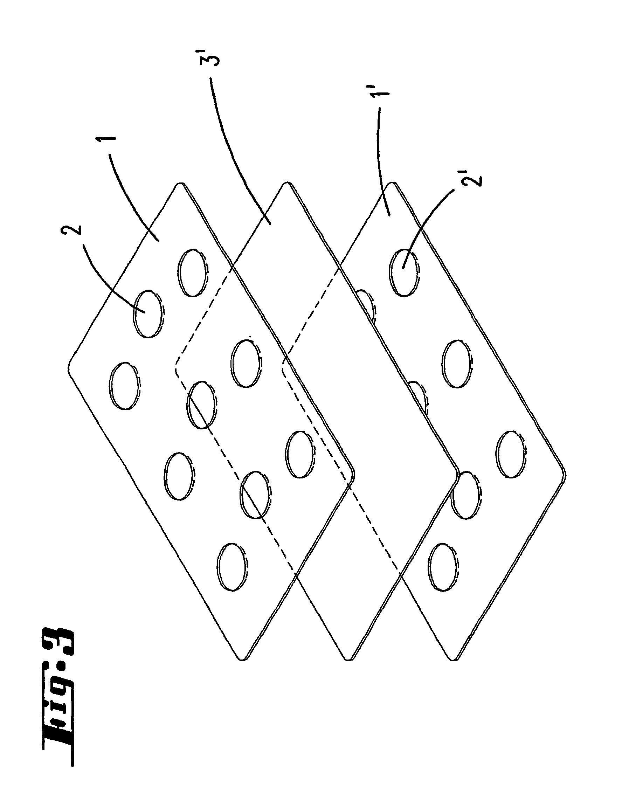

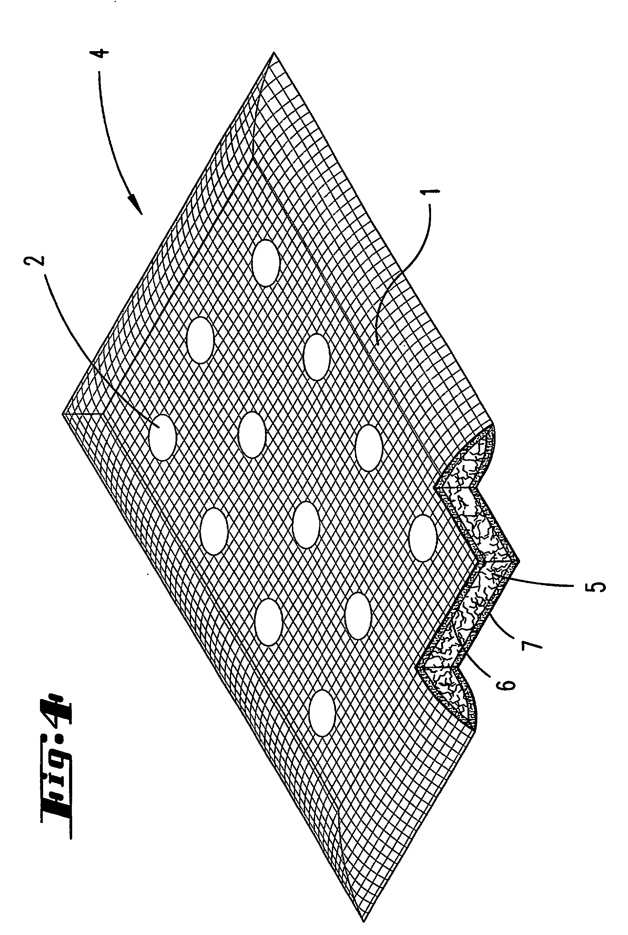

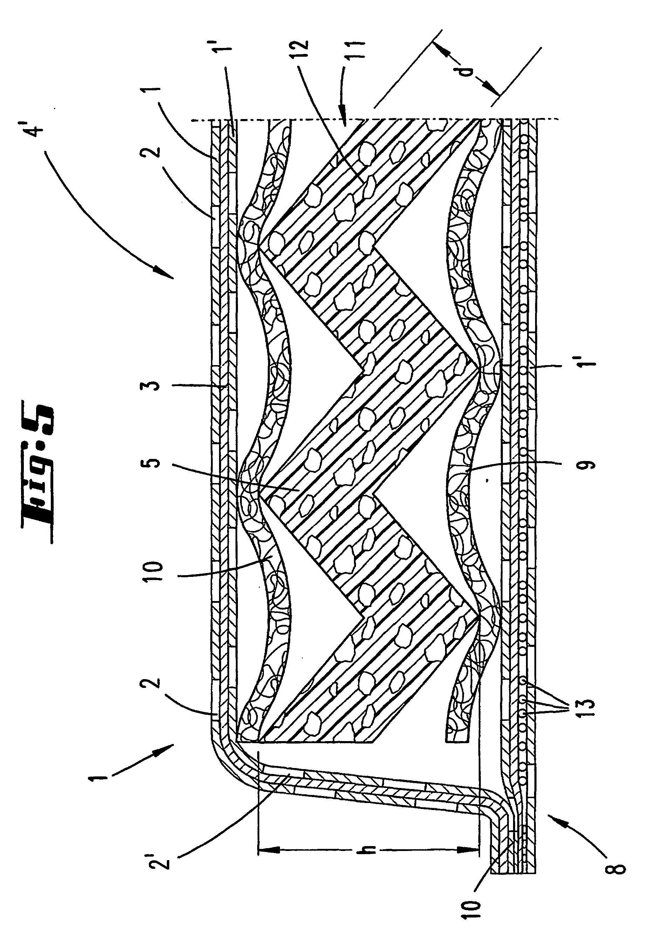

Dargestellt und beschrieben ist, zunächst mit Bezug zu Fig. 1, eine Folienlage 1 für ein Isolationselement wie es bspw. in den Fig. 4 oder 5 dargestellt ist.

Wesentlich ist, dass die Folienlage 1 aus einem Brand-ausbreitungshemmenden Material, hier Polyimid, besteht. Weiter ist von Bedeutung, dass diese Folienlage 1 Durchlassöffnungen 2 aufweist, die dampfdiffusionsoffen ausgebildet sind.

Die dampfdiffusionsoffene Ausbildung der Durchlassöffnungen 2 ist konkret durch eine die Öffnungen 2 abdeckende und auf die Folienlage 1 aufkaschierte Zweitfolienlage 3 erreicht, wobei die Zweitfolienlage 3 aus dampfdiffusionsoffenem Material besteht.

Aus der Querschnittsdarstellung gemäß Fig. 2 ist zu erkennen, dass eine Durchlassöffnung 2 in der Folienlage 1 aus einer Ausstanzung gebildet ist, die ein entsprechendes Loch hinterlässt. Dieses Loch ist durch eine einseitige Abdeckung mittels der dampfdiffusionsoffenen Folienlage 3 dampfdiffusionsoffen verschlossen.

Grundsätzlich kann die Folienlage 3 auch beidseitig der Durchlassöffnung 2 aufgebracht sein. Im praktischen Einsatzfall empfiehlt es sich jedenfalls, die Folienlage 3 auf der Innenseite der Folienlage 1, also der Vlies- und/oder Schaumstofflage zugeordnet, anzubringen.

In Fig. 3 ist ein weiteres Ausführungsbeispiel dargestellt, bei welchem die Umhüllung des Isolationselementes aus drei Lagen, einer Folienlage 1, einer Zweitfolienlage 3' und einer Drittfolienlage 1', besteht.

Die Folienlage 1 ist mit der Folienlage 1 gemäß Fig. 1 identisch, jedoch sind hier die Durchlassöffnungen 2 frei belassen, also ist kein Verschluss dieser Öffnung mit einer dampfdiffusionsoffenen Folie vorgesehen. Es handelt sich vielmehr um tatsächliche Öffnungen, die durch nichts verschlossen sind.

Jedoch ist hier unterhalb und vollständig überdeckend zu der Folienlage 1 eine Zweitfolienlage 3' angeordnet, welche der Zweitfolienlage 3, materialmäßig, gemäß dem Ausführungsbeispiel der Fig. 1 und 2 entspricht. Es handelt sich also hier um eine dampfdiffusionsoffene Folie. Diese ist integral durchgehend, also ohne irgendwelche Durchlassöffnungen, ausgebildet.

Weiter ist unterhalb der Zweitfolienlage 3' eine Drittfolienlage 1' angeordnet. Es handelt sich hier materialmäßig wieder um eine Brand-ausbreitungshemmende Folie, also entsprechend bzw. materialmäßig identisch der Folienlage 1. Diese ist auch hinsichtlich der Durchlassöffnungen in gleicher Weise ausgebildet wie die Folienlage 1. Jedoch können im konkreten Fall die Durchlassöffnungen 2' der Drittfolienlage 1' so angeordnet sein, dass sie sich nicht überdeckend zu den Durchlassöffnungen 2 der Folienlage 1 befinden. Die Durchlassöffnungen 2 der Folienlage 1 und der Drittfolienlage 1' sind zueinander versetzt.

In Fig. 4 ist ein erstes konkretes Ausführungsbeispiel dargestellt, wobei hier eine Folienlage 1 mit dampfdiffusionsoffenen Durchlassöffnungen 2 gemäß dem Ausführungsbeispiel der Fig. 1 und 2 eingesetzt ist.

Das dargestellte Isolationselement 4 besteht entsprechend aus einer Folienlage 1, welche vorder- und rückseitig eine dazwischen angeordnete Vlieslage 5 umhüllend ausgebildet ist.

Die dampfdiffusionsoffenen Durchlassöffnungen 2 sind lediglich angedeutet. Von Bedeutung ist jedoch, was auch hinsichtlich der weiteren Ausführungsbeispiele und allgemein anwendbar ist, dass die dampfdiffusionsoffenen Durchlassöffnungen 2 hier nur einem Mittelbereich des Isolationselementes zugeordnet ausgebildet sind, wohingegen ein umlaufender Randbereich von diesen Öffnungen 2 ausgenommen ist. Alternativ ist es aber auch möglich, die Dampfdiffusionsöffnungen 2 regelmäßig verteilt über die gesamte Außenfläche des Isolationselementes 4 vorzusehen.

Anstelle der Vlieslage 5 kann auch eine Polyimid-Schaumstoff-Plattenware vorgesehen sein.

Hinsichtlich der Vlieslage kann es sich um Material aus einem Polymer wie bspw. PPS oder einer Mischung aus PPS und Copolyester oder anderen organischen oder anorganischen Fasern handeln. Insbesondere kann es sich auch, allein oder in Mischung, um Melaminharzfasern handeln. Das Flächengewicht der Vlieslage kann zwischen 50 und 800 g/m² liegen.

Auch die Vlieslage, deren Fasern, ist vorzugsweise inhärent flammwidrig ausgebildet.

Die Folienlage 1 besitzt eine geringe Dicke, etwa zwischen 10 und 50 µ, vorzugsweise bei 20 µ. Im Bereich der Durchlassöffnungen 2 kann die dort vorgesehene dampfdiffusionsoffene Folienlage mit gleicher Dicke vorgesehen sein.

Von weiterer Bedeutung ist auch, dass den Folien 1, 2, aber auch den Zweitfolienlagen 3 bzw. 3' Fasern, die durch das Raster der Zeichnung angedeutet sind, aufkaschiert sind. Es kann sich um Glasfasern, aber Melamin-Harzfasern und/oder Polyesterfasern handeln. Die Fasern sind nur einseitig der Folienlagen 1 bzw. 2 oder 3, 3' vorgesehen. Das Raster liegt zwischen etwa 1 und 5 mm. Es sind jeweils quer zueinander verlaufende Fasern vorgesehen.

Die mittige Vlieslage 5 ist in weiterer Einzelheit von jeweils flächendeckend darüber angeordneten Vlieslagen 6, 7, die jedoch dünner sind, überdeckt.

Beim Ausführungsbeispiel der Fig. 5 ist ein Isolationselement 4', hier lediglich im Querschnitt, dargestellt, dessen Umhüllung gemäß dem Ausführungsbeispiel der Fig. 3 ausgebildet ist.

Hinsichtlich der Umhüllung ist zunächst ersichtlich, dass diese jeweils dreilagig ausgebildet ist, so dass sich im Randbereich 8 eine Sechslagigkeit ergibt.

Die äußerste Lage ist jeweils eine Folienlage 1 aus einem Polyimid- oder PPS-Werkstoff mit Durchlassöffnungen 2, wie hinsichtlich Fig. 3 beschrieben. Darunter befindet sich die Folienlage 3 aus dampfdiffusionsoffenem Material. Darunter wiederum als Drittlage die Folienlage 1' mit Durchlassöffnungen 2'.

Im Randbereich 8 sind alle sechs Lagen miteinander schweißverbunden.

Das dargestellte Isolationselement 4' weist in weiterer Einzelheit zwei Vlieslagen 9 und 10 auf, die aus gleichartigem oder nicht gleichartigem Material gebildet sein können. Die Fasern des Vliesmaterials bestehen aus einem Polymer, wie bspw. PPS oder einer Mischung aus PPS und Copolyester und anderen organischen und anorganischen Fasern, wobei die Flächengewichte der Vlieslagen 9, 10 zwischen 50 und 800 g/m² liegen. Zudem kann die obere Vlieslage 9 aus einem melt-blown-Vlies und die untere Vlieslage 10 aus einem thermisch gebundenen Volumenvlies und/oder einer Schaumstofflage bestehen.

Die Fasern der Vlieslagen 9, 10 sind thermoplastisch und inhärent flammwidrig. Die Granulate, aus welchen die Vliesfasern gewonnen werden, weisen eine bestimmte Schmelz-Viskosität auf. Die Vliese sind auch hydrolysebeständig. Zudem sind sie akustisch absorbierend sowie dämmend. Darüber hinaus wirken sie wärmeisolierend. Sie können auch intumeszierend ausgerüstet werden, um das Brandverhalten weiterhin günstig zu beeinflussen.

Die mittlere Lage 11 ist als Schaumstofflage ausgebildet, insbesondere als Polyimid-Schaumstofflage. Diese Schaumstofflage 11 ist, wie aus der Schnittdarstellung der Fig. 5 ersichtlich, uneben, dreidimensional strukturiert. Konkret ist die Ausbildung so gewählt, dass die Schaumstofflage 11 in Ebenenerstreckung zickzackförmig verläuft. Durch die Wahl eines Polyimid-Schaumstoffes ist bei einem vergleichsweise großen Volumen eine sehr leichtgewichtige Mittellage zur Bildung des Isolationselementes 4' geschaffen.

Die Schaumstofflage 11 besteht in weiterer Einzelheit aus einem zugeschnittenen Polyimid-Schaumstoff, wobei durch die Dicke und/oder den Winkelverlauf zur Senkrechten der Zickzackstege 12 ein gewünschtes Schall-Absorptionsverhalten einstellbar ist. In dem gezeigten Ausführungsbeispiel ist eine Materialdicke d von ca. 8 mm gewählt, bei einer Gesamthöhe h der Schaumstofflage 11 von ca. 24 mm.

Die Dicken der Vlieslagen 9, 10 betragen - in nicht komprimiertem Zustand - etwa ein Drittel bis ein Zehntel der mittleren Schaumstofflage 11. Die Dicken der Vlieslagen 9, 10 liegen absolut im Bereich von 0,5 bis 5 mm.

Hinsichtlich der Folienlagen 1, 3, 2' kann es sich bezüglich einer, zweier oder auch aller drei Folienlagen um faserverstärkte Folien handeln. Die Dicken sind jeweils sehr gering. Absolut liegt die Dicke einer Folienlage 1, 3, 1' zwischen 10 und 50 µ, vorzugsweise bei 20 µ. Die Dichte einer solchen Folie liegt bei 0,9 bis 1,4 g/m³. Die dampfdiffusionsoffene Folienlage 3 ist thermoplastisch und auch bevorzugt hydrolysebeständig und flammgeschützt. Die Folienlagen 1' der Vorderseite und der Rückseite können weiter bevorzugt auch unterschiedliche Wasserdampfdurchlässigkeiten, auch hinsichtlich einer unterschiedlichen Richtungscharakteristik (nur einlassend oder nur auslassend) aufweisen.

Hinsichtlich der Folienlagen 1 und 1' kann es sich um inhärent flammwidrige Polymere handeln. Als Fasern 13, die beim Ausführungsbeispiel nur einseitig bei der unteren Folienlage 1' vorgesehen sind, kann es sich um Glasfasern, aber auch um Melamin-Harzfasern handeln, die aufkaschiert sind.

Die Folienlagen 3, 1' und 1 sind außerhalb der Randbereiche nur einfach übereinander gelegt. Es ergibt sich hinsichtlich des Isolationselementes insgesamt gleichsam ein Kissen mit einer durch die dreilagigen äußeren Folien gebildeten Hülle.

## Patentansprüche

1. Isolationselement (4, 4'), wobei mindestens eine Vlieslage (5) und/oder eine Schaumstofflage (11) von einer Folienlage (1) umhüllt ist, **dadurch gekennzeichnet, dass** die Folienlage (1) aus einem Brand-ausbreitungshemmenden dampfdiffusionsgeschlossenen Werkstoff besteht, dass die Folienlage (1) weiter Durchlassöffnungen (2) aufweist und dass die Durchlassöffnungen (2) vermittels einer Zweitfolienlage (3) dampfdiffusionsoffen ausgebildet sind.

2. Isolationselement nach Anspruch 1 oder insbesondere danach, **dadurch gekennzeichnet, dass** die Durchlassöffnungen (2) aus in der Folienlage (1) ausgebildeten Ausnehmungen (2) bestehen und dass die Ausnehmungen (2) durch eine fensterartig angeordnete Zweitfolie (3) aus dampfdiffusionsoffenem Werkstoff verschlossen sind.

3. Isolationselement nach einem oder mehreren der vorhergehenden Ansprüche oder insbesondere danach, **dadurch gekennzeichnet, dass** die Durchlassöffnungen (2) als kreisförmige Löcher ausgebildet sind.

4. Isolationselement nach einem oder mehreren der vorhergehenden Ansprüche oder insbesondere danach, **dadurch gekennzeichnet, dass** die Zweitfolie (3) als Zweitfolienlage unterhalb der äußeren Folienlage (1) und diese auch in den von Durchlassöffnungen (2) freien Bereichen überdeckend angeordnet ist.

5. Isolationselement nach einem oder mehreren der vorhergehenden Ansprüche oder insbesondere danach, **dadurch gekennzeichnet, dass** die Zweitfolie (3) und die äußere Folienlage (1) miteinander kaschierverbunden sind.

6. Isolationselement nach einem oder mehreren der vorhergehenden Ansprüche oder insbesondere danach, **dadurch gekennzeichnet, dass** unterhalb der Zweitfolienlage (3) eine Drittfolienlage (1') angeordnet ist und dass auch die Drittfolienlage (1') dampfdiffusionsoffene Durchlassöffnungen (2') aufweist.

7. Isolationselement nach einem oder mehreren der vorhergehenden Ansprüche oder insbesondere danach, **dadurch gekennzeichnet, dass** die Drittfolienlage (1') aus einem Brand-ausbreitungshemmenden Material besteht.

8. Isolationselement nach einem oder mehreren der vorhergehenden Ansprüche oder insbesondere danach, **dadurch gekennzeichnet, dass** der Brand-ausbreitungshemmende Werkstoff Polyimid, PPS, PET, PVF oder PVDF ist.

## Claims

1. Insulation element (4, 4'), at least one nonwoven layer (5) and/or a foam layer (11) being enclosed by a film layer (1), **characterized in that** the film layer (1) consists of a flame-retardant material which is closed to vapour diffusion, **in that** the film layer (1) also has through-openings (2) and **in that** the through-openings (2) are formed to be open to vapour diffusion by means of a second film layer.

2. Insulation element according to Claim 1 or in particular according thereto, **characterized in that** the through-openings (2) comprise cut-outs (2) formed in the film layer (1) and **in that** the cut-outs (2) are closed by a second film (3) of material which is open to vapour diffusion, disposed in a window-like manner.

3. Insulation element according to one or more of the preceding claims or in particular according thereto, **characterized in that** the through-openings (2) are formed as circular holes.

4. Insulation element according to one or more of the preceding claims or in particular according thereto, **characterized in that** the second film (3) is disposed as a second film layer under the outer film layer (1) and in such a way that it covers the latter even in the regions without through-openings (2).

5. Insulation element according to one or more of the preceding claims or in particular according thereto, **characterized in that** the second film (3) and the outer film layer (1) are laminated to each other.

6. Insulation element according to one or more of the preceding claims or in particular according thereto, **characterized in that** a third film layer (1') is disposed under the second film layer (3) and **in that** the third film layer (1') also has through-openings (2') which are open to vapour diffusion.

7. Insulation element according to one or more of the preceding claims or in particular according thereto, **characterized in that** the third film layer (1') consists of a flame-retardant material.

8. Insulation element according to one or more of the preceding claims or in particular according thereto, **characterized in that** the flame-retardant material is polyimide, PPS, PET, PVF or PVDF.

## Revendications

1. Elément d'isolation (4, 4'), dans lequel au moins une couche de non-tissé (5) et/ou une couche de matière alvéolaire (11) est enveloppée d'une couche en feuille (1), **caractérisé en ce que** la couche en feuille (1) est constituée d'un matériau ralentissant la propagation du feu, imperméable à la diffusion de vapeur, **en ce que** la couche en feuille (1) comprend, en outre, des ouvertures de passage (2) et **en ce que** les ouvertures de passage (2) sont réalisées perméables à la diffusion de vapeur à l'aide d'une deuxième couche en feuille (3).

2. Elément d'isolation selon la revendication 1 ou en particulier selon celle-ci, **caractérisé en ce que** les ouvertures de passage (2) sont constitués d'évidements (2) formés dans la couche en feuille (1) et **en ce que** les évidements (2) sont obturés par une deuxième feuille (3) faite d'un matériau perméable à la diffusion de vapeur, disposée à la manière d'une fenêtre.

3. Elément d'isolation selon une ou plusieurs des revendications précédentes ou en particulier selon celles-ci, **caractérisé en ce que** les ouvertures de passage (2) sont réalisés comme des trous en forme de cercles.

4. Elément d'isolation selon une ou plusieurs des revendications précédentes ou en particulier selon celles-ci, **caractérisé en ce que** la deuxième feuille (3) est disposée comme deuxième couche en feuille en dessous de la couche en feuille (1) extérieure et celle-ci est également disposée de manière couvrante dans les zones exemptes d'ouvertures de passage.

5. Elément d'isolation selon une ou plusieurs des revendications précédentes ou en particulier selon celles-ci, **caractérisé en ce que** la deuxième feuille (3) et la couche en feuille (1) extérieure sont assemblées l'une à l'autre par stratification.

6. Elément d'isolation selon une ou plusieurs des revendications précédentes ou en particulier selon celles-ci, **caractérisé en ce qu'**une troisième couche en feuille (1') est disposée en dessous de la deuxième couche en feuille (3) et **en ce que** la troisième couche en feuille (1') comporte également des ouvertures de passage (2') perméables à la diffusion de vapeur.

7. Elément d'isolation selon une ou plusieurs des revendications précédentes ou en particulier selon celles-ci, **caractérisé en ce que** la troisième couche en feuille (1') est constituée d'un matériau ralentissant la propagation du feu.

8. Elément d'isolation selon une ou plusieurs des revendications précédentes ou en particulier selon celles-ci, **caractérisé en ce que** le matériau ralentissant la propagation du feu est du polyimide, du PPS, du PET, du PVF ou du PVDF.
